# EUROPEAN PATENT APPLICATION

(11) **EP 2 793 341 A1**
(43) Date of publication of application: **22.10.2014**
(21) Application number: 11877345.6
(22) Date of filing: 13.12.2011
(51) Int. Cl.: H02H 7/18, H01H 37/76, H01H 85/02

(54) **SYSTEM FOR PREVENTION OF AND PROTECTION AGAINST FIRE DUE TO FUSE MISUSE**

(71) Applicant: Volvo Construction Equipment AB, 631 85 Eskilstuna (SE)
(72) Inventor: KIM, Tae-Youn, Changwon-si Gyeongsangnam-do 642-818 (KR)
(74) Representative: Burger, Markus
(86) International application number: PCT/KR2011/009568
(87) International publication number: WO 2013/089288

(57) **Abstract**

The present invention relates to a system including a slow blow fuse interposed between a high-capacity fuse and a load, and which blocks an overcurrent from flowing into the load with a fusing part melted to be cut when the overcurrent having passed through the high-capacity fuse is input. The system protects equipment from damage to wiring and from the danger of fire that occurs due to electric overloads arising from fuse misuse and faulty circuit modification.

## Description

### FIELD OF THE INVENTION

The present invention relates to a system for prevention of and protection against a fire caused by fuse misuse. More particularly, the present invention relates to a system for prevention of and protection against a fire caused by fuse misuse, in which if a user who does not know an electric circuit well uses a high capacity fuse connected to an excessive electrical load, an overcurrent flowing to the wring exceeds a permissible capacity of the wiring, and in order to prevent this from occurring, a slow blow fuse designed to be blown out more slowly than a normal fuse is installed at a rear end of the high capacity fuse so that the machine can be protected from a risk of a damage and of a fire of the wiring caused by an electrical overload due to fuse misuse and faulty circuit modification.

### BACKGROUND OF THE INVENTION

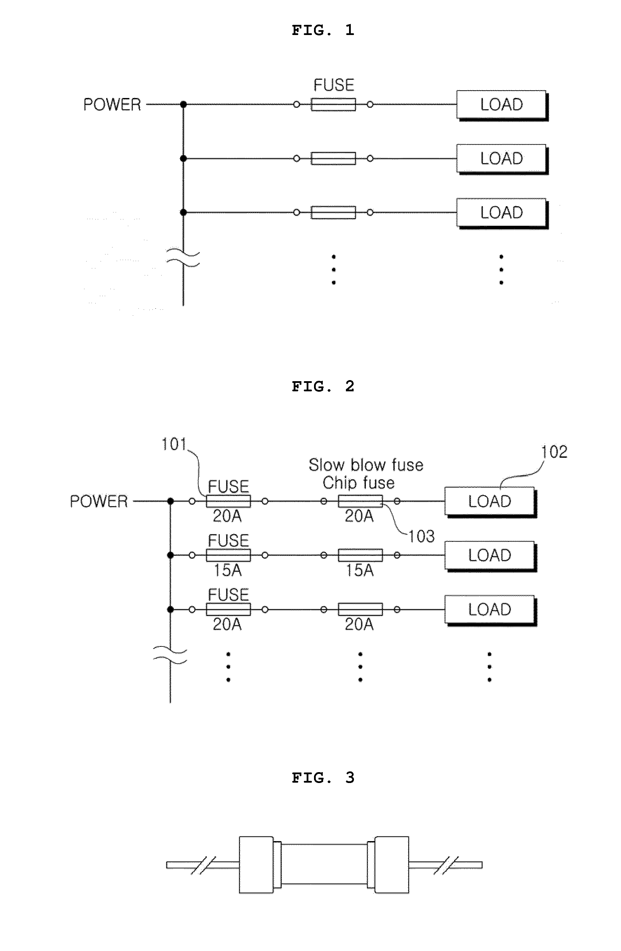

A convention general electric power circuit is configured such that electricity from a battery is supplied to a load via a fuse, and the fuse is blown out if an abnormal state such as short-circuit occurs in the load as shown in Fig. 1.

However, in the case where a user arbitrarily connects an additional electric device to a normal circuit and thus the capacity of the fuse is increased, if a shot-circuit occurs in the normal circuit, the wiring is not protected but an electric overload is applied due to the fuse with the increased capacity, so that the wiring may be melt, leading to a fire.

That is, if the user who does not know an electric circuit well uses a high capacity fuse connected to an excessive electrical load, an overcurrent flowing to the wring exceeds a permissible capacity of the wiring, and as a result, a damage and a fire of the wiring may occur.

### DETAILED DESCRIPTION OF THE INVENTION

### TECHNICAL PROBLEMS

Accordingly, the present invention has been made to solve the aforementioned problem occurring in the prior art, and it is an object of the present invention to provide a system for prevention of and protection against a fire caused by fuse misuse, in which the machine can be protected from a risk of a damage and of a fire of the wiring caused by an electrical overload due to fuse misuse and faulty circuit modification.

### TECHNICAL SOLUTION

To accomplish the above object, a system for prevention of and protection against a fire caused by fuse misuse in accordance with an embodiment of the present invention in accordance with an embodiment of the present invention is configured such that if a user who does not know an electric circuit well uses a high capacity fuse connected to an excessive electrical load, an overcurrent flowing to the wring exceeds a permissible capacity of the wiring, and in order to prevent this from occurring, a slow blow fuse designed to be blown out more slowly than a normal fuse is installed at a rear end of the high capacity fuse so that the machine can be protected from a risk of a damage and of a fire of the wiring caused by an electrical overload due to fuse misuse and faulty circuit modification.

Specifically, the present invention provides a system for prevention of and protection against a fire caused by fuse misuse, comprising a load and a high breaking capacity fuse having a rated capacity higher than that of a normal fuse that is installed to be suit to the capacity of the load, wherein the improvement comprises a slow blow fuse installed between the high breaking capacity fuse and the load and having a melting part that is melted to be broken due to a temperature rise when an overcurrent having passed through the high breaking capacity fuse is applied to the slow blow fuse to interrupt the overcurrent flowing to the load.

Preferably, the load may be any one selected from among a lamp installed on a boom or an operator's cab, a wiper motor, a fan motor, and a machine controller.

In addition, the slow blow fuse may include: an element made of a metal to enable electricity to flow therethrough; a housing configured to securely fix the element; a cover made of a transparent material to allow the state of the fuse to be confirmed therethrough; and the melting part positioned on the element inside the housing without being in close contact with the housing and the cover, the melting part being melted to be broken due to a temperature rise when the overcurrent flows therethrough.

### ADVANTAGEOUS EFFECT

The system for prevention of and protection against a fire caused by fuse misuse in accordance with an embodiment of the present invention as constructed above has the following advantages.

If a user who does not know an electric circuit well uses a high capacity fuse connected to an excessive electrical load, an overcurrent flowing to the wring exceeds a permissible capacity of the wiring. In order to prevent this from occurring, a slow blow fuse designed to be blown out more slowly than a normal fuse is installed at a rear end of the high capacity fuse so that the machine can be protected from a risk of a damage and of a fire of the wiring caused by an electrical overload due to fuse misuse and faulty circuit modification

That is, the present invention enables the machine to be protected from a risk of a damage and of a fire of the wiring caused by an electrical overload due to fuse misuse and faulty circuit modification.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a schematic block diagram showing a fuse system for a general vehicle in accordance with the prior art;
Fig. 2 is a schematic block diagram showing a system for prevention of and protection against a fire caused by fuse misuse in accordance with an embodiment of the present invention; and
Fig. 3 is a perspective view showing an example of a slow blow fuse that can be used in the present invention.

### *Explanation on reference numerals of main elements in the drawings *

101: high breaking capacity fuse
102: load
103: slow blow fuse

### PREFERRED EMBODIMENTS OF THE INVENTION

Now, preferred embodiments of the present invention will be described in detail with reference to the accompanying drawings. The matters defined in the description, such as the detailed construction and elements, are nothing but specific details provided to assist those of ordinary skill in the art in a comprehensive understanding of the invention, and the present invention is not limited to the embodiments disclosed hereinafter.

In order to definitely describe the present invention, a portion having no relevant to the description will be omitted, and throughout the specification, like elements are designated by like reference numerals.

In the specification and the claims, when a portion includes an element, it is meant to include other elements, but not exclude the other elements unless otherwise specially stated herein.

Fig. 2 is a schematic block diagram showing a system for prevention of and protection against a fire caused by fuse misuse in accordance with an embodiment of the present invention

As shown in Fig. 2, if a user who does not know an electric circuit well uses a high capacity fuse connected to an excessive electrical load, an overcurrent flowing to the wring exceeds a permissible capacity of the wiring. In order to prevent this from occurring, the system according to the present invention is configured such that a slow blow fuse 103 designed to be blown out more slowly than a normal fuse is installed at a rear end of the high capacity fuse so that the machine can be protected from a risk of a damage and of a fire of the wiring caused by an electrical overload due to fuse misuse and faulty circuit modification.

Specifically, in the inventive system for prevention of and protection against a fire caused by fuse misuse, including a load 102 and a high breaking capacity fuse 101 having a rated capacity higher than that of a normal fuse that is installed to be suit to the capacity of the load 102, a slow blow fuse 103 is installed between the high breaking capacity fuse 101 and the load 102.

In other words, in a system for prevention of and protection against a fire caused by fuse misuse, including a load 102 and a high breaking capacity fuse 101 having a rated capacity higher than that of a normal fuse that is installed to be suit to the capacity of the load 102, a slow blow fuse 103 is installed between the high breaking capacity fuse 101 and the load 102 and has a melting part that is melted to be broken due to a temperature rise when an overcurrent having passed through the high breaking capacity fuse 101 is applied to the slow blow fuse 103 to interrupt the overcurrent flowing to the load 102.

Herein, for example, in the case where instead of a normal fuse having a rated capacity of 15A, a high breaking capacity fuse having a rated capacity of 20A is used in a state of being connected to a load, when an overcurrent flows to the load, it exceeds a permissible capacity range of the wiring designed to be suited to both the existing normal fuse having the rated capacity of 15A and the load, so that the high breaking capacity fuse is not blown out but the wiring is burnt. In order to solve this problem, the present invention provides a system in which a slow blow fuse 103 is installed at a rear end of the high breaking capacity fuse so that when an overcurrent exceeding a maximum design capacity flows to the wiring, the slow blow fuse 103 is caused to be blown out, thereby preventing a dangerous situation such a fire or the like that may occurs additionally.

In a system for prevention of and protection against a fire caused by fuse misuse according to the present invention, including a load 102 and a high breaking capacity fuse 101 having a rated capacity higher than that of a normal fuse that is installed to be suit to the capacity of the load 102, a slow blow fuse 103 is installed between the high breaking capacity fuse 101 and the load 102 and has a melting part that is melted to be broken due to a temperature rise when an overcurrent having passed through the high breaking capacity fuse 101 is applied to the slow blow fuse 103 to interrupt the overcurrent flowing to the load 102.

In a detailed configuration, the system according to the present invention has a structure in which the slow blow fuse 103 is installed between the load 102 and the high breaking capacity fuse 101 having a rated capacity higher than that of a normal fuse that is installed to be suit to the capacity of the load 102, and a melting part is melted to be broken due to a temperature rise when an overcurrent having passed through the high breaking capacity fuse 101 is applied to the slow blow fuse 103 to interrupt the overcurrent flowing to the load 102.

For example, the slow blow fuse 103 may include: an element made of a metal to enable electricity to flow therethrough; a housing configured to securely fix the element; a cover made of a transparent material to allow the state of the fuse to be confirmed therethrough; and the melting part positioned on the element inside the housing without being in close contact with the housing and the cover, the melting part being melted to be broken due to a temperature rise when the overcurrent flows therethrough.

The load 102 that is connected to a rear end of the flow blow fuse 103 according to the present invention may be any one selected from among a lamp installed on a boom or an operator's cab, a wiper motor, a fan motor, and a machine controller.

The operation of the a system for prevention of and protection against a fire caused by fuse misuse in accordance with an embodiment of the present invention as shown in Fig. 2 will be described hereinafter.

The operation of the inventive system is performed in such a manner that the slow blow fuse 103 is installed between the load 102 and the high breaking capacity fuse 101 having a rated capacity higher than that of a normal fuse that is installed to be suit to the capacity of the load 102, so that the melting part is melted to be broken due to a temperature rise when an overcurrent having passed through the high breaking capacity fuse 101 is applied to the slow blow fuse 103 to interrupt the overcurrent flowing to the load 102.

For example, in the case of instead of a normal fuse having a rated capacity of 15A, a high breaking capacity fuse having a rated capacity of 20A is used in a state of being connected to a load, when an overcurrent flows to the load, it exceeds a permissible capacity range of the wiring designed to be suited to both the existing normal fuse having the rated capacity of 15A and the load, so that the high breaking capacity fuse is not blown out but the wiring is burnt.

In order to solve this problem, the present invention provides a system in which a slow blow fuse 103 is installed at a rear end of the high breaking capacity fuse so that when an overcurrent exceeding a maximum design capacity flows to the wiring, the slow blow fuse 103 is caused to be blown out, thereby preventing a dangerous situation such a fire or the like that may occurs additionally.

The slow blow fuse 103, for example, may include: an element made of a metal to enable electricity to flow therethrough; a housing configured to securely fix the element; a cover made of a transparent material to allow the state of the fuse to be confirmed therethrough; and the melting part positioned on the element inside the housing without being in close contact with the housing and the cover, the melting part being melted to be broken due to a temperature rise when the overcurrent flows therethrough.

As described above, if a user who does not know an electric circuit well uses a high capacity fuse connected to an excessive electrical load, an overcurrent flowing to the wring exceeds a permissible capacity of the wiring. In order to prevent this from occurring, a slow blow fuse designed to be blown out more slowly than a normal fuse is installed at a rear end of the high capacity fuse so that the machine can be protected from a risk of a damage and of a fire of the wiring caused by an electrical overload due to fuse misuse and faulty circuit modification.

Hereinafter, a slow blow fuse of the system for prevention of and protection against a fire caused by fuse misuse in accordance with an embodiment of the present invention as shown in Fig. 2 will be described in more detail with reference to Fig.3.

Fig. 3 is a perspective view showing an example of a slow blow fuse that can be used in the present invention.

As shown in Fig. 3, the slow blow fuse that can be used in the present invention is a small-sized fuse developed in the form of a glass or chip. The slow blow fuse designed to be capable of being mounted on a PCB, and thus it is impossible for a user to easily change the slow blow fuse. For this reason, if a user who is not an expert change the slow blow fuse easily, there is a risk of misuse of the slow blow fuse.

For reference, the slow blow fuse that can be used in the present invention is mounted on an electric circuit for an automobile, an industrial machine, or the like to prevent damage and fire of the machine due to overcurrrent.

The slow blow fuse must not be melt to be broken for an overcurrent that is less than about 110% of a rated current capacity. If an overcurrent of more than 110% of the rated current capacity is applied to the machine, the slow blow fuse must be melt to be broken within the time conforming to a standard according to a ratio of the overcurrent, and simultaneously a risk of a fire must be eliminated.

The slow blow fuse may employ two structures, i.e., a structure in which the slow blow fuse is not subject to soldering, and a structure in which a heat-dissipating plate is formed and then the slow blow fuse is subject to soldering.

The slow blow fuse according to the present invention is installed between a high capacity fuse and a load to protect the machine from a risk of damage and of a fire of the wiring caused by an electrical overload due to fuse misuse and faulty circuit modification.

### INDUSTRIAL APPLICABILITY

As described above, according to the system of the present invention as constructed above, if a user who does not know an electric circuit well uses a high capacity fuse connected to an excessive electrical load, an overcurrent flowing to the wring exceeds a permissible capacity of the wiring. In order to prevent this from occurring, a slow blow fuse designed to be blown out more slowly than a normal fuse is installed at a rear end of the high capacity fuse so that the machine can be protected from a risk of a damage and of a fire of the wiring caused by an electrical overload due to fuse misuse and faulty circuit modification.

## Claims

1. A system for prevention of and protection against a fire caused by fuse misuse, comprising a load and a high breaking capacity fuse having a rated capacity higher than that of a normal fuse that is installed to be suit to the capacity of the load, wherein the improvement comprises:
a slow blow fuse installed between the high breaking capacity fuse and the load and having a melting part that is melted to be broken due to a temperature rise when an overcurrent having passed through the high breaking capacity fuse is applied to the slow blow fuse to interrupt the overcurrent flowing to the load.

2. The system according to claim 1, wherein the load is any one selected from among a lamp installed on a boom or an operator's cab, a wiper motor, a fan motor, and a machine controller.

3. The system according to claim 1 or 2, wherein the slow blow fuse comprises:
an element made of a metal to enable electricity to flow therethrough;
a housing configured to securely fix the element;
a cover made of a transparent material to allow the state of the fuse to be confirmed therethrough; and
the melting part positioned on the element inside the housing without being in close contact with the housing and the cover, the melting part being melted to be broken due to a temperature rise when the overcurrent flows therethrough.
